# EUROPEAN PATENT APPLICATION

(11) **EP 4 596 086 A1**
(43) Date of publication of application: **06.08.2025**
(21) Application number: 23872117.9
(22) Date of filing: 21.09.2023
(51) Int. Cl.: B01D 53/14, B01J 20/02, B01J 20/30

(54) **DEOXYGENATION AGENT COMPOSITION, METHOD FOR PRODUCING SAME, AND DEOXYGENATION AGENT PACKAGE**

(30) Priority: 30.09.2022 JP 2022158420; 28.03.2023 JP 2023050994
(71) Applicant: MITSUBISHI GAS CHEMICAL COMPANY, INC., Chiyoda-ku Tokyo 100-8324 (JP)
(72) Inventor: SATO Daiki, Tokyo 125-8601 (JP)
(74) Representative: Müller-Boré & Partner Patentanwälte PartG mbB
(86) International application number: PCT/JP2023/034309
(87) International publication number: WO 2024/070891

(57) **Abstract**

Disclosed is an oxygen scavenger composition including iron powder, activated carbon, water, a halide of an alkaline earth metal, and an alkaline substance, in which a content of the activated carbon is 20 parts by mass or more and 40 parts by mass or less with respect to 100 parts by mass of a content of the iron powder, a content of the water is 230 parts by mass or more and 370 parts by mass or less with respect to 100 parts by mass of the content of the activated carbon, and a content of the halide of the alkaline earth metal is 50 parts by mass or more and 65 parts by mass or less with respect to 100 parts by mass of the content of the water.

## Description

### Technical Field

The present invention relates to an oxygen scavenger composition, a method for producing the oxygen scavenger composition, and an oxygen scavenger package.

### Background Art

In the known art, an oxygen scavenger (hereinafter, an iron-based oxygen scavenger) using an oxidation reaction of iron powder has been proposed. Commercially available oxygen scavengers (for example, trade name "AGELESS", available from MITSUBISHI GAS CHEMICAL COMPANY, INC.) are already widely used for maintaining quality and freshness of articles such as foods and pharmaceutical products by hermetically storing the oxygen scavenger together with the articles in a gas barrier container and removing oxygen in the container.

Examples of the iron-based oxygen scavenger include a "moisture-dependent" oxygen scavenger that starts oxygen absorption using moisture evaporated from a preserved object or the like, and a "self-reactive" oxygen scavenger that previously has moisture necessary for an oxygen absorption reaction of iron in an oxygen scavenger composition.

In the "self-reactive" oxygen scavenger, moisture necessary for the oxygen absorption reaction of iron can be supplemented from a moisture-donating agent to iron by making the moisture-donating agent such as an inorganic filler impregnated with moisture present in the oxygen scavenger composition.

However, since the self-reactive oxygen scavenger contains moisture in advance, when a preserved object such as a dry food product or a pharmaceutical product having a lower moisture content (in other words, low water activity) than the self-reactive oxygen scavenger is to be preserved, there is an issue that moisture is transferred from the oxygen scavenger composition to the preserved object, and the moisture content of the preserved object changes. When moisture is transferred to the preserved object, moisture necessary for the oxygen absorption reaction of iron is lost from the oxygen scavenger composition, and there is also an issue that oxygen absorption performance is deteriorated.

Such moisture transfer from the oxygen scavenger composition to the preserved object tends to occur more easily as a difference in water activity between the preserved object and the oxygen scavenger composition is larger. Thus, in the known art, it has been studied to obtain an oxygen scavenger composition having a water activity close to that of a preserved object.

For example, Patent Document 1 proposes an oxygen scavenger composition containing iron powder, calcium chloride, water, and a water-retaining carrier, in which the contents of water and calcium chloride are controlled within predetermined ranges.

The oxygen scavenger composition proposed in Patent Document 1 exhibits excellent oxygen absorption performance even in a low-humidity atmosphere while solving the issue of moisture transfer to a preserved object having a relatively low water activity.

### Citation List

### Patent Document

Patent Document 1: JP 6690201 B

### Summary of Invention

### Technical Problem

On the other hand, an oxygen scavenger composition exhibiting relatively low water activity (so-called intermediate water activity) tends to be inferior in oxygen absorption performance to an oxygen scavenger composition having high water activity, and it is necessary to use a large amount of iron powder and water in order to increase an oxygen absorption amount. However, when a large amount of iron powder and water is used, an amount of hydrogen generated by these reactions during oxygen absorption increases, which causes deformation and rupture of a container. Thus, as an oxygen scavenger composition having intermediate water activity capable of absorbing a large amount of oxygen while suppressing the hydrogen generation amount is required.

Thus, an object of the present invention is to provide an oxygen scavenger composition that exhibits intermediate water activity, is excellent in oxygen absorption performance, and generates a small amount of hydrogen, a method for producing the oxygen scavenger composition, and an oxygen scavenger package.

### Solution to Problem

That is, the gist of constituents of the present invention includes the following:
[1] An oxygen scavenger composition including iron powder, activated carbon, water, a halide of an alkaline earth metal, and an alkaline substance,
   wherein a content of the activated carbon is 20 parts by mass or more and 40 parts by mass or less with respect to 100 parts by mass of a content of the iron powder, a content of the water is 230 parts by mass or more and 370 parts by mass or less with respect to 100 parts by mass of the content of the activated carbon, and a content of the halide of the alkaline earth metal is 50 parts by mass or more and 65 parts by mass or less with respect to 100 parts by mass of the content of the water.
[2] The oxygen scavenger composition according to [1], wherein the halide of the alkaline earth metal is one or more selected from the group consisting of calcium chloride, magnesium chloride, magnesium bromide, and calcium bromide.
[3] The oxygen scavenger composition according to [1] or [2], wherein the alkaline substance is one or more selected from the group consisting of hydroxides of alkali metals, hydroxides of alkaline earth metals, and salts composed of a weak acid and a strong base.
[4] The oxygen scavenger composition according to any one of [1] to [3], wherein the alkaline substance is calcium hydroxide.
[5] The oxygen scavenger composition according to any one of [1] to [4], further including a swelling agent.
[6] The oxygen scavenger composition according to [5], wherein the swelling agent is one or more selected from the group consisting of carboxymethylcellulose calcium, carboxymethylcellulose sodium, calcium bentonite, and sodium bentonite.
[7] The oxygen scavenger composition according to [5] or [6], wherein a content of the swelling agent is 3 parts by mass or more and 20 parts by mass or less with respect to 100 parts by mass of the content of the water.
[8] The oxygen scavenger composition according to any one of [1] to [7], which is a granular material.
[9] The oxygen scavenger composition according to any one of [1] to [8], wherein a water activity of the oxygen scavenger composition is 0.40 or more and 0.60 or less.
[10] A method for producing the oxygen scavenger composition according to any one of [1] to [9], the method including mixing iron powder, activated carbon, water, a halide of an alkaline earth metal, and an alkaline substance.
[11] An oxygen scavenger package including:
   the oxygen scavenger composition according to any one of [1] to [9]; and
   an air-permeable packaging material accommodating the oxygen scavenger composition.

### Advantageous Effects of Invention

According to the present invention, it is possible to provide an oxygen scavenger composition which exhibits an intermediate water activity, is excellent in oxygen absorption performance, and generates a small amount of hydrogen, a method for producing the oxygen scavenger composition, and an oxygen scavenger package.

### Description of Embodiments

Embodiments of an oxygen scavenger composition, a method for producing the oxygen scavenger composition, and an oxygen scavenger package according to the present invention will be described in detail below.

Note that, in the present description, a phrase of "A to B" indicating a numerical range means "A or more and B or less" (in the case of A < B), or "A or less and B or more" (in the case of A > B). Furthermore, in the present invention, a combination of preferable aspects is a more preferable aspect.

### [Oxygen scavenger composition]

The oxygen scavenger composition of the present invention contains iron powder, activated carbon, water, a halide of an alkaline earth metal, and an alkaline substance, a content of the activated carbon is 20 parts by mass or more and 40 parts by mass or less with respect to 100 parts by mass of the content of the iron powder, a content of the water is 230 parts by mass or more and 370 parts by mass or less with respect to 100 parts by mass of the content of the activated carbon, and a content of the halide of the alkaline earth metal is 50 parts by mass or more and 65 parts by mass or less with respect to 100 parts by mass of the content of the water.

With the above configuration, the oxygen scavenger composition of the present invention exhibits intermediate water activity, can exhibit excellent oxygen absorption performance, and can also suppress generation of hydrogen.

In the present specification, the "intermediate water activity" means that water activity is within a range of "0.4 or more and 0.6 or less".

The reason why the oxygen scavenger composition of the present invention exhibits the above-mentioned effect is not clear but one possible reason is as follows.

In the known art, as a moisture-donating agent contained in a self-reactive oxygen scavenger composition, a product in which an inorganic filler such as silica or diatomaceous earth is used as a water-retaining carrier, and water is supported on the water-retaining carrier is used.

On the other hand, in the present invention, in particular, it is characterized that activated carbon is selectively used as the water-retaining carrier. Since activated carbon is a component that also functions as a reaction accelerator of an oxygen absorption reaction of iron, it is presumed that the oxygen absorption performance of an oxygen scavenger composition to be obtained is improved as compared with a water-retaining carrier such as silica used in the known art. In addition, activated carbon tends to have a larger water absorption amount (water capacity) per unit mass than silica and the like, and it is presumed that even when the amount of the moisture-donating agent is reduced, sufficient water can be supplied to iron, and the oxygen absorption performance is improved as compared with the case of using silica and the like. For these reasons, it is considered that when activated carbon is used as the water-retaining carrier, an oxygen absorption amount per unit mass of the oxygen scavenger composition (bulk powder) can be increased.

The oxygen scavenger composition of the present invention is characterized to contain an alkaline substance. By containing the alkaline substance, a surface of iron (in particular, moisture present on the surface) can be kept alkaline. As a result, it is considered that a hydrogen ion concentration in reaction water can be reduced at the time of the oxygen absorption reaction on the surface of iron, and generation of hydrogen by reduction of hydrogen ions by iron can be effectively suppressed.

In addition, the oxygen scavenger composition of the present invention is considered to be capable of achieving both the effect of improving the oxygen absorption performance and the effect of suppressing hydrogen generation while exhibiting the intermediate water activity, particularly by controlling the blending amounts of activated carbon, water, and a halide of an alkaline earth metal to a predetermined ratio.

Hereinafter, each component and the like are described.

### (Iron powder)

The oxygen scavenger composition of the present invention contains iron powder.

The iron powder in the oxygen scavenger composition of the present invention is a main agent of a deoxidizing reaction.

The iron powder is not particularly limited, preferably has an exposed surface of iron (0 valent metallic iron), and may have an extremely thin oxide film like a normal metal surface as long as the effect of the present invention is not hindered. Specifically, a reduced iron powder, an electrolytic iron powder, an atomized iron powder, or the like can be suitably used. Furthermore, a pulverized product or a cutting chip of cast iron or the like can also be used.

The iron powder can be used singly in one kind, or as required, in combination of two or more kinds. Furthermore, as these iron powders, commercially available products can be easily obtained and can also be used.

The iron powder has an average particle size (D50) of, for example, 3000 µm or less, preferably 1000 µm or less, more preferably 500 µm or less, and still more preferably 300 µm or less from the viewpoint of improving contact with oxygen, and preferably 1 µm or more, more preferably 10 µm or more, and still more preferably 20 µm or more from the viewpoint of suppressing generation of dust. Specifically, the average particle size (D50) of the iron powder is preferably from 1 to 1000 µm, more preferably from 10 to 500 µm, and still more preferably from 20 to 300 µm.

As the iron powder having an average particle size within the above range, commercially available iron powder can be appropriately selected and obtained. For example, the iron powder can also be obtained by classification using a sieve corresponding to a desired average particle size.

The average particle size of the iron powder can be measured by the method described in the Examples.

A specific surface area of the iron powder is preferably 0.03 m²/g or more, more preferably 0.05 m²/g or more from the viewpoint of the oxygen absorption performance, and is preferably 0.50 m²/g or less, more preferably 0.20 m²/g or less from the viewpoint of suppressing generation of dust. Specifically, the specific surface area of the iron powder is preferably from 0.03 to 0.50 m²/g and more preferably from 0.05 to 0.20 m²/g.

The specific surface area of the iron powder can be measured by the method described in the Examples.

The content of the iron powder is not particularly limited and is preferably 15 mass% or more and 75 mass% or less, more preferably 20 mass% or more and 60 mass% or less, and still more preferably 25 mass% or more and 50 mass% or less in the oxygen scavenger composition.

### (Activated carbon)

The oxygen scavenger composition of the present invention contains activated carbon.

The activated carbon in the oxygen scavenger composition of the present invention functions as a reaction accelerator and a water-retaining carrier.

The activated carbon is not particularly limited, and the raw materials may be any type of wood, coconut shell, coal, and the like; however, from the viewpoint of using the oxygen scavenger composition of the present invention for foods, one or more kinds selected from wood and coconut shell are preferable.

The properties of the activated carbon are not particularly limited; however, from the viewpoint of handling ease when producing the oxygen scavenger composition, a particulate or powdered activated carbon having high fluidity is suitably used, and an activated carbon having a shape that is close to spherical is more preferable.

The activated carbon can be used singly in one kind, or as required, in combination of two or more kinds. Furthermore, as these activated carbons, commercially available products can be easily obtained and can also be used.

The average particle size of the activated carbon in a powder form is preferably 0.1 µm or more and 1000 µm or less, more preferably 1 µm or more and 100 µm or less, and still more preferably 1 µm or more and 50 µm or less from the viewpoint of handling ease at the time of producing the oxygen scavenger composition. Any particles of the activated carbon can be used regardless of whether they are primary particles, agglomerated particles or granules, as long as the particles have a particle size in the range described above. The activated carbon having a particle size in the range described above can be used singly in one kind, or several kinds thereof having different particle sizes can be mixed in any ratio. As such activated carbon, commercially available products can be easily obtained and can also be used.

The average particle size of the activated carbon can be measured by the method described in the Examples.

The content of the activated carbon is 20 parts by mass or more and 40 parts by mass or less, preferably 20 parts by mass or more and 30 parts by mass or less, more preferably 20 parts by mass or more and 25 parts by mass or less, and still more preferably 20 parts by mass or more and 23 parts by mass or less with respect to 100 parts by mass of the content of the iron powder. When the content is within the above range, an oxygen scavenger composition exhibiting the intermediate water activity, excellent in oxygen absorption performance and generating a small amount of hydrogen can be obtained. On the other hand, when the content of the activated carbon is too small, moisture cannot be sufficiently retained, the oxygen scavenger composition is formed into a slurry form, the function as a reaction accelerator is not sufficiently exerted, and the oxygen absorption performance tends to be deteriorated.

### (Water)

The oxygen scavenger composition of the present invention contains water.

The water contained in the oxygen scavenger composition of the present invention is a component necessary for allowing the deoxidizing reaction to proceed.

The water content is 230 parts by mass or more and 370 parts by mass or less, preferably 250 parts by mass or more and 370 parts by mass or less, more preferably 270 parts by mass or more and 370 parts by mass or less, still more preferably 300 parts by mass or more and 370 parts by mass or less, and further more preferably 300 parts by mass or more and 350 parts by mass or less with respect to 100 parts by mass of the content of the activated carbon. When the content is within the above range, an oxygen scavenger composition exhibiting the intermediate water activity, excellent in oxygen absorption performance and generating a small amount of hydrogen can be obtained. On the other hand, when the water content is too large, the oxygen absorption performance tends to be significantly deteriorated, and the hydrogen generation amount also tends to increase.

### (Halide of alkaline earth metal)

The oxygen scavenger composition of the present invention contains a halide of an alkaline earth metal.

The halide of the alkaline earth metal in the oxygen scavenger composition of the present invention is a substance that catalytically acts on an oxidation reaction of iron powder to improve the activity of the iron powder. In addition, the halide of the alkaline earth metal plays a role of preventing water contained in the oxygen scavenger composition from being evaporated and lost from the oxygen scavenger composition, and exhibits an effect of suppressing moisture transfer to a preserved object.

In order for iron to absorb oxygen, it is necessary to attract moisture to the surface of iron, which utilizes a deliquescence phenomenon of metal salts.

The halide of the alkaline earth metal is a metal salt exhibiting deliquescence, has a high solubility in water and is easy to lower the water activity as compared with a halide of an alkali metal and the like, and thus is effective when preparing an oxygen scavenger composition (bulk powder) having the intermediate water activity.

The halide of the alkaline earth metal is preferably contained in the oxygen scavenger composition as an aqueous solution dissolved in water.

The halide of the alkaline earth metal is not particularly limited, examples thereof include chlorides, bromides, and iodides of alkaline earth metals, and preferred are one or more selected from the group consisting of chlorides and bromides of alkaline earth metals.

Among them, from the viewpoint of handling ease, safety, and the like, the halide of the alkaline earth metal is preferably one or more selected from the group consisting of calcium chloride, magnesium chloride, magnesium bromide, and calcium bromide, more preferably one or more selected from the group consisting of calcium chloride and magnesium chloride, and still more preferably calcium chloride.

The halide of the alkaline earth metal can be used singly in one kind, or as required, in combination of two or more kinds. In addition, as the halide of the alkaline earth metal as described above, a commercially available product can be easily obtained and can also be used.

The content of the halide of the alkaline earth metal is 50 parts by mass or more and 65 parts by mass or less, preferably 52 parts by mass or more and 62 parts by mass or less, and more preferably 52 parts by mass or more and 56 parts by mass or less with respect to 100 parts by mass of the water content. When the content is within the above range, an oxygen scavenger composition exhibiting the intermediate water activity, excellent in oxygen absorption performance and generating a small amount of hydrogen can be obtained. On the other hand, when the content of the halide of the alkaline earth metal is too large, the oxygen absorption performance tends to be deteriorated.

### (Alkaline substance)

The oxygen scavenger composition of the present invention contains an alkaline substance.

The alkaline substance in the oxygen scavenger composition of the present invention plays a role of keeping a surface of iron (in particular, moisture present on the surface) alkaline. As a result, it is considered that a hydrogen ion concentration in reaction water can be reduced at the time of the oxygen absorption reaction on the surface of iron, and generation of hydrogen by reduction of hydrogen ions by iron can be effectively suppressed.

The alkaline substance is not particularly limited, and is preferably one or more selected from the group consisting of hydroxides of alkali metals, hydroxides of alkaline earth metals, and salts composed of a weak acid and a strong base, more preferably one or more selected from the group consisting of hydroxides of alkali metals and hydroxides of alkaline earth metals, and still more preferably hydroxides of alkaline earth metals.

Examples of the hydroxide of the alkali metal include potassium hydroxide and sodium hydroxide, and of these, sodium hydroxide is preferable.

Examples of the hydroxide of the alkaline earth metal include calcium hydroxide and magnesium hydroxide, and among them, calcium hydroxide is preferable.

Examples of the salt composed of a weak acid and a strong base include phosphate salts, citrate salts, carbonate salts and hydrogencarbonate salts, and among them, phosphate salts and citrate salts are preferable. The salts composed of a weak acid and a strong base specifically include trisodium phosphate, trisodium citrate, sodium hydrogencarbonate, and sodium carbonate; and trisodium phosphate and trisodium citrate are preferable.

The alkaline substance can be used singly in one kind, or as required, in combination of two or more kinds. Furthermore, as these alkaline substances, commercially available products can be easily obtained and can also be used.

It is generally known that an oxidation rate of iron is affected by pH, and the oxidation rate of iron tends to decrease in a high pH region. Thus, from the viewpoint of maintaining high oxygen absorption performance, it is more preferable to use calcium hydroxide (slaked lime) that has suitable solubility and can also function as a pH adjusting agent as the alkaline substance.

The content of the alkaline substance is not particularly limited, and is preferably 0.2 parts by mass or more and 10 parts by mass or less, more preferably 0.3 parts by mass or more and 5 parts by mass or less, and still more preferably 0.5 parts by mass or more and 3 parts by mass or less with respect to 100 parts by mass of the content of the iron powder. When the content is within the above range, an oxygen scavenger composition which is excellent in oxygen absorption performance while exhibiting the intermediate water activity, and generates a small amount of hydrogen can be obtained.

### (Swelling agent)

The oxygen scavenger composition of the present invention preferably further contains a swelling agent.

The swelling agent in the oxygen scavenger composition of the present invention is a substance that undergoes swelling by moisture and has a binding function to retain the oxygen scavenger composition as a granular material. The swelling agent is preferably used in a substantially dry state or in a semi-swollen or swollen state in which a small amount to required amount of water has been absorbed.

The swelling agent is not particularly limited as long as it is a generally known swelling agent, and known swelling agents, binding agents, adhesives, and binders used in foods and the like can be used.

Examples of an inorganic swelling agent include bentonites such as calcium bentonite and sodium bentonite; and clay minerals such as sodium montmorillonite. Examples of an organic swelling agent include organic bentonites; natural products such as defatted frozen tofu, agar-agar, starches, dextrin, gum arabic, gelatin, and casein; semi-synthetic products, e.g. cellulosic semi-synthetic products such as crystalline cellulose, carboxymethylcellulose, sodium carboxymethylcellulose, calcium carboxymethylcellulose and hydroxyethylcellulose, lignin sulfonic acid and hydroxyethylated starches; and synthetic products such as water-insolubilized polyvinyl alcohol and polyvinyl methyl ether.

Among them, the swelling agent is preferably one or more selected from the group consisting of clay minerals and cellulose-based semi-synthetic products.

Clay minerals are preferable because they are inexpensive and excellent in performance. Clay minerals are also known as inorganic soaps and function as lubricants. In addition, it is known that a clay mineral swollen with water exhibits a high thixotropy and also exhibits a binding property, and thus it is preferable.

The cellulose-based semi-synthetic products exhibit an excellent swelling property and are preferable.

In particular, the swelling agent is more preferably one or more selected from the group consisting of carboxymethylcellulose calcium, sodium carboxymethylcellulose, calcium bentonite, and sodium bentonite, and still more preferably one or more selected from the group consisting of calcium bentonite and sodium bentonite, from the viewpoint of being inexpensive, having a strong binding power, and being excellent in handleability.

The swelling agents described above can be used singly in one kind, or as required, in combination of two or more kinds. Commercially available products may be used as these swelling agents.

The swelling agent has an average particle size of preferably 1 µm or more and 100 µm or less, and more preferably 5 µm or more and 50 µm or less from the viewpoint of suppression of generation of dust and the binding function.

The average particle size of the swelling agent can be measured by the method described in the Examples.

The content of the swelling agent is preferably 3 parts by mass or more and 20 parts by mass or less, more preferably 5 parts by mass or more and 15 parts by mass or less, still more preferably 5 parts by mass or more and 12 parts by mass or less, and further more preferably 5 parts by mass or more and 10 parts by mass or less with respect to 100 parts by mass of the water content. When the content is within the above range, an oxygen scavenger composition exhibiting the intermediate water activity, excellent in oxygen absorption performance and generating a small amount of hydrogen can be obtained.

### (Additional component)

The oxygen scavenger composition of the present invention may contain additional components as necessary in addition to the above components. Examples of other components include a water-retaining carrier other than activated carbon, a fluidity improver, a catalyst, an odor adsorbent, and a thermal dispersant.

The water-retaining carrier other than activated carbon is not particularly limited as long as it can retain water, and generally available porous materials and highly water absorbing resins can be used.

Examples of porous materials include diatomaceous earth, zeolite, sepiolite, cristobalite, porous glass, silica, activated clay, acid clay, vermiculite, and wood meal.

Examples of highly water absorbing resins include polyacrylate salt-based resins, polysulfonate salt-based resins, polyacrylamide-based resins, polyvinyl alcohol-based resins, starch-based resins, cellulose-based resins, and polyalginate-based resins.

However, in the present invention, since the activated carbon functions as a water-retaining carrier, it is not necessary to intentionally use a water-retaining carrier other than the activated carbon, and the water-retaining carrier can be used as long as the effect of the present invention is not hindered. From the viewpoint of increasing the proportion of the activated carbon in the water-retaining carrier, the content of the water-retaining carrier other than the activated carbon is preferably 5 parts by mass or less, and more preferably 1 part by mass or less with respect to 100 parts by mass of the content of the iron powder, and it is still more preferable that substantially no water-retaining carrier other than the activated carbon is contained, that is, the content is 0 part by mass with respect to 100 parts by mass of the content of the iron powder.

### <Shape of oxygen scavenger composition>

The shape of the oxygen scavenger composition of the present invention is not particularly limited, and is preferably a granular material.

Here, the granular material may be an agglomerated particle or a granule.

Examples of the particle shape include spherical, substantially spherical, elliptical, and cylindrical, and the shape is preferably spherical or substantially spherical, and more preferably spherical, from the viewpoint of the tendency to improve filling properties and to increase the bulk density.

The average particle size of the oxygen scavenger composition of the present invention is not particularly limited and is preferably 0.3 mm or more and 5.0 mm or less, and more preferably 0.5 mm or more and 2.0 mm or less. When the average particle size is 0.3 mm or more, the oxygen scavenger composition is less likely to be deposited onto a powdery/granular material contact portion of a packaging machine due to static electricity or the like during filling and packaging, and when the average particle size is 5.0 mm or less, a gap between particles is less likely to become too large, thereby suppressing the reduction in oxygen absorption amount per unit volume. The oxygen scavenger composition having an average particle size within the above range can be obtained, for example, through sieving using a sieve having openings of 0.3 mm and 5.0 mm.

The average particle size of the oxygen scavenger composition can be measured by the method described in the Examples.

### <Characteristics of oxygen scavenger composition>

The oxygen scavenger composition of the present invention preferably exhibits the intermediate water activity.

The water activity means that a water vapor pressure of water evaporated from the oxygen scavenger composition is closer to a water vapor pressure of pure water as the numerical value is closer to 1.

The water activity of the oxygen scavenger composition of the present invention is preferably 0.40 or more and 0.60 or less, more preferably 0.42 or more and 0.55 or less, and still more preferably 0.42 or more and 0.53 or less, which is so-called intermediate water activity.

A method for measuring the water activity is not particularly limited, and the water activity can be measured using a known instrument such as a dew point type water activity measuring instrument; however, specifically, the water activity can be measured by the method described in Examples.

Usually, when an article is preserved in a sealed state, the larger a difference in water activity between a preserved object and the oxygen scavenger composition, the more likely the moisture transfer occurs. Thus, from the viewpoint of suppressing the moisture transfer, the water activity of the oxygen scavenger composition is preferably about the same as the water activity of the preserved object.

Since the oxygen scavenger composition of the present invention exhibits the intermediate water activity, the oxygen scavenger composition is suitably used for preservation of the preserved object exhibiting the intermediate water activity.

Examples of the preserved object suitable for the oxygen scavenger composition of the present invention include foods such as rice, millet, spices, shavings, dried sardines, and seaweed laver; industrial products such as electronic components having solder joints, metal screws, and metal blades such as razors; pharmaceutical products such as compression tablets, crude drugs, and drug substances with hydrolysis concern; and various articles. Among them, the oxygen scavenger composition is suitably used for preservation of pharmaceutical products.

### [Method for producing oxygen scavenger composition]

A method for producing the oxygen scavenger composition of the present invention is not particularly limited, and preferably includes a step of mixing iron powder, activated carbon, water, a halide of an alkaline earth metal, and an alkaline substance.

According to such a production method, a granular material is prepared by mixing iron powder, activated carbon, water, a halide of an alkaline earth metal, and an alkaline substance until they are uniformly dispersed, and an oxygen scavenger composition can be efficiently prepared.

The mixing step may be (1) a step of mixing all the components at once, (2) a step of providing an aqueous solution in which a halide of an alkaline earth metal is dissolved in water in advance, adding the aqueous solution to a mixture obtained by uniformly mixing iron powder, activated carbon, an alkaline substance, and a swelling agent and other components as necessary, and mixing the mixture, or (3) a step of providing an aqueous solution in which a halide of an alkaline earth metal and an alkaline substance are dissolved in water in advance, adding the aqueous solution to a mixture obtained by uniformly mixing iron powder, activated carbon, and a swelling agent and other components as necessary, and mixing the mixture. From the viewpoint of obtaining a more homogeneous oxygen scavenger composition, the step (2) or (3) is preferable. In the case of (3), the halide of the alkaline earth metal reacts with the alkaline substance in the aqueous solution, and the concentration of the halide of the alkaline earth metal may change. Thus, from the viewpoint of adding and mixing the halide of the alkaline earth metal as an aqueous solution prepared to a desired concentration to the iron powder and the like, the step (2) is more preferable.

The mixing method is not particularly limited, and can be performed by shaking mixing, mixing with a mixing device, or the like. Specific examples of the mixing device include a Nauta mixer (available from Hosokawa Micron Corporation), a conical mixer (available from Ono Kagaku Kikai K.K.), a vertical granulator (available from Powrex corp.), a high speed mixer (available from EARTHTECHNICA Co., Ltd.), and a granulator (available from AKIRAKIKO Co., Ltd.).

Since iron, which is a main agent of the oxygen scavenger, reacts with oxygen, the reaction with oxygen progresses gradually even in the absence of water, a halide of an alkaline earth metal, or the like. Thus, it is preferable to perform the mixing in an inert atmosphere (in a case where a substantially sealed system is used, the system is normally under an inert gas (for example, N₂) atmosphere without oxygen), and to take a heat removal means as appropriate.

### [Oxygen scavenger package]

The oxygen scavenger package according to an embodiment of the present invention includes the oxygen scavenger composition described above and an air-permeable packaging material accommodating the oxygen scavenger composition.

### (Packaging material)

Examples of the packaging material include a packaging material having a bag shape formed by bonding two sheets of an air-permeable packaging material to each other, a packaging material having a bag shape formed by bonding one sheet of an air-permeable packaging material and one sheet of a non-air-permeable packaging material to each other, and a packaging material having a bag shape formed by folding one sheet of an air-permeable packaging material and sealing edges other than the folded portion.

Here, when the air-permeable packaging material and the non-air-permeable packaging material each have a quadrilateral shape, examples of the packaging material include a packaging material having a bag shape formed by overlapping two sheets of an air-permeable packaging material and heat-sealing their four sides, a packaging material having a bag shape formed by overlapping one sheet of an air-permeable packaging material and one sheet of a non-air-permeable packaging material and heat-sealing their four sides, and a packaging material having a bag shape formed by folding one sheet of an air-permeable packaging material and heat-sealing its three sides other than the folded portion. Furthermore, the packaging material may be a packaging material having a bag shape formed by forming an air-permeable packaging material into a tubular shape and heat-sealing both ends and a trunk portion of the resulting tubular body.

### (Air-Permeable Packaging Material)

As the air-permeable packaging material, a packaging material through which oxygen and carbon dioxide permeates is selected. Among them, those having an air permeability resistance measured by an Oken-type air permeability tester method of preferably 40000 seconds or less, more preferably 30000 seconds or less, still more preferably 20000 seconds or less, further more preferably 10000 seconds or less, and preferably 500 seconds or more, more preferably 1000 seconds or more are suitably used. Here, the air permeability resistance refers to a value measured by a method in accordance with JIS P 8117 (1998). More specifically, the air permeability resistance can be measured by the method described in the Examples.

As the air-permeable packaging material, in addition to paper and nonwoven fabric, a plastic film, to which air permeability is imparted, is used. Examples of such a plastic film include a laminate film produced by laminating and bonding a film of polyethylene terephthalate, polyamide, polypropylene, polycarbonate, or the like, and a film of polyethylene, an ionomer, polybutadiene, ethylene acrylic acid copolymer, ethylene methacrylic acid copolymer, ethylene vinyl acetate copolymer, or the like as a sealing layer. These laminates can also be used as the air-permeable packaging material.

As the method of imparting air permeability, various methods can be employed, in addition to punching with a cold needle or a heat needle. When air permeability is imparted by punching, the air permeability can be freely adjusted by a diameter and the number of holes to be punched, a material, and the like.

The thickness of the laminate film is preferably 30 µm or more and 300 µm or less, and more preferably 40 µm or more and 250 µm or less. In this case, as compared to a case where the thickness deviates from the range described above, the packaging material can be a packaging material that retains strength and has an excellent heat sealing property and packaging suitability.

### (Use of oxygen scavenger package)

Since the oxygen scavenger package of the present invention contains the oxygen scavenger composition of the present invention, the oxygen scavenger package exhibits the intermediate water activity, is excellent in oxygen absorption performance, and generates a small amount of hydrogen. Thus, the oxygen scavenger package is suitably used for preservation of a preserved object exhibiting the intermediate water activity.

Specifically, the oxygen scavenger package of the present invention is suitably used in a method for deoxidizing a space in a gas barrier container accommodating a preserved object exhibiting the intermediate water activity by using the oxygen scavenger package. According to such a method, the moisture transfer from the oxygen scavenger package to the preserved object can be suppressed, and in addition, the space in the gas barrier container can be efficiently deoxygenated, so that the quality of the preserved object can be maintained well.

When the oxygen scavenger package of the present invention is used, it is preferable to use as a package including the oxygen scavenger package, a preserved object, and a gas barrier container for accommodating these. At this time, the humidity of the space in the gas barrier container is preferably 40%RH or more and 60%RH or less from the viewpoint of maintaining the quality of the preserved object. The preserved object is preferably one or more selected from foods, industrial products, and pharmaceutical products, and more preferably pharmaceutical products.

Although the embodiments of the present invention have been described above, the present invention is not limited to the above-described embodiments, and includes all aspects included in the concept of the present invention and the scope of the claims, and can be variously modified within the scope of the present invention.

### Examples

Hereinafter, the present embodiment will be described in detail using Examples and Comparative Examples, but the present embodiment can be modified as appropriate as long as the present embodiment achieves the effects of the present invention.

### <Material>

Materials and the like used in Examples and Comparative Examples are listed below.
· Calcium chloride (CaCl₂): special grade reagent, available from FUJIFILM Wako Pure Chemical Corporation
· Iron powder: average particle size 100 µm, specific surface area 0.104 m²/g

### [Measurement of average particle size of iron powder]

As the average particle size of the iron powder, an average particle size (D50) of a cumulative frequency of 50% was determined by the weight fractions in accordance with the mesh sizes of standard sieves after subjecting the particles to vibration for 5 minutes using the standard sieves conforming to ISO 3310-1:2000 (corresponding to JIS Z8801-1:2006).

### [Specific surface area of iron powder]

The specific surface area (unit: m²/g) of the iron powder was measured based on a BET multipoint method in accordance with JIS Z8830:2013.
· Activated carbon: "SHIRASAGI A" available from Osaka Gas Chemicals Co., Ltd., powdery, average particle size 10 µm

### [Average particle size of activated carbon]

The average particle size of the activated carbon was determined by measuring the average particle size (D50) at a cumulative frequency of 50% in a volume-based particle size distribution using a laser diffraction/scattering particle size distribution analyzer ("LA-960" available from HORIBA, Ltd.).
· Calcium hydroxide (Ca(OH)₂): special grade reagent, available from FUJIFILM Wako Pure Chemical Corporation
· Bentonite: calcium bentonite, "Neokunibond" available from KUNIMINE INDUSTRIES CO., LTD., average particle size 32.7 µm

### [Average particle size of swelling agent]

The average particle size of the swelling agent (bentonite) was determined by measuring the average particle size (D50) at a cumulative frequency of 50% in a volume-based particle size distribution using a laser diffraction/scattering particle size distribution analyzer ("LA-960" available from HORIBA, Ltd.).
· Silica: precipitated wet silica, "CARPLEX (Registered Trademark) #67" available from EVONIC
· Air-permeable packaging material A: bag shape having an outer dimension of 40 mm × 30 mm

The air-permeable packaging material A was produced by using a multilayer sheet (thickness: 52 µm, air permeability resistance: 5300 seconds) having a configuration of linear low density polyethylene (perforated film, thickness: 30 µm, hereinafter simply referred to as "LLDPE")/western paper (basis weight 50 g/m²)/polyethylene terephthalate (perforated film, thickness: 12 µm, hereinafter referred to as "PET"), bending the multilayer sheet such that the LLDPE was on the inner side, and heat-sealing three sides with a seal width of 5 mm such that one side was an opening.

### [Air permeability resistance of multilayer sheet]

The air permeability resistance of the multilayer sheet was measured three times using a digital type Oken type air-permeability tester ("EG02" available from Asahi Seiko Co., Ltd.). An arithmetic average value of the obtained results was used as a measurement result.
· Air-permeable packaging material B: bag shape having an outer dimension of 100 mm × 70 mm

The air-permeable packaging material B was produced by using a multilayer sheet (thickness: 39 µm, air permeability resistance: 10 seconds (the measurement method was as described above)) having a configuration of LLDPE (as described above)/western paper (basis weight: 50 g/m²), bending the multilayer sheet such that the LLDPE was on the inner side, and heat-sealing three sides with a seal width of 5 mm such that one side was an opening.

### <Production of oxygen scavenger composition and oxygen scavenger package using oxygen scavenger composition>

### (Example 1)

### [1] Production of oxygen scavenger composition

First, in 14.8 g of water, 8.4 g of calcium chloride (CaCl₂) as a halide of an alkaline earth metal was dissolved to prepare an aqueous calcium chloride solution.

Next, 20.0 g of iron powder, 4.0 g of activated carbon, 0.2 g of calcium hydroxide (Ca(OH)₂) as an alkaline substance, and 1.5 g of bentonite as a swelling agent were put in a poly container having a volume of 300 ml and shaken and mixed to obtain a mixture.

Subsequently, an aqueous calcium chloride solution prepared in advance was added to the mixture, and the mixture was further shaken and mixed to obtain an oxygen scavenger composition.

The obtained oxygen scavenger composition was a granular material in which powdery particles were aggregated (average particle size: 1.60 mm).

### [Average particle size of oxygen scavenger composition]

The average particle size of the oxygen scavenger composition was determined by measuring the average particle size (D50) at a cumulative frequency of 50% in a volume-based particle size distribution using a laser diffraction/scattering particle size distribution analyzer ("LA-960" available from HORIBA, Ltd.).

### [2] Production of oxygen scavenger package

### [2-1] Production of oxygen scavenger package A (sample for measuring oxygen absorption amount)

After filling the air-permeable packaging material A with 0.8 g of the oxygen scavenger composition produced in the above [1], the opening was heat-sealed with a seal width of 5 mm to be sealed, thereby producing a bag-type oxygen scavenger package A.

Until the produced oxygen scavenger package A was subjected to the measurement of the oxygen absorption amount, the oxygen scavenger package A was stored by putting the oxygen scavenger package A into a gas barrier bag low in the oxygen permeability (available from Fukusuke Kogyo Co., Ltd, one obtained by laminating barrier nylon and LLDPE) with its opening sealed by heat-sealing so as not to react with oxygen in the air.

### [2-2] Production of oxygen scavenger package B (sample for measuring hydrogen generation amount)

After filling the air-permeable packaging material B with 25 g of the oxygen scavenger composition produced in the above [1], the opening was heat-sealed with a seal width of 5 mm to be sealed, thereby producing a bag-type oxygen scavenger package B.

Until the produced oxygen scavenger package B was subjected to the measurement of the hydrogen generation amount, the oxygen scavenger package B was stored by putting the oxygen scavenger package B into a gas barrier bag low in the oxygen permeability (available from Fukusuke Kogyo Co., Ltd, one obtained by laminating barrier nylon and LLDPE) with its opening sealed by heat-sealing so as not to react with oxygen in the air.

### (Examples 2 to 16 and Comparative Examples 4 and 5)

In Examples 2 to 16 and Comparative Examples 4 and 5, an oxygen scavenger composition and the oxygen scavenger packages A and B were produced in the same manner as in Example 1 except that the blending amount of each component was changed to the value listed in Table 1.

### (Comparative Examples 1 to 3)

In Comparative Examples 1 to 3, an oxygen scavenger composition was produced in the same manner as in Example 1 except that the blending amount of each component was changed to the value listed in Table 1.

However, since the obtained oxygen scavenger composition had a small amount of activated carbon, could not sufficiently retain water, and was in a slurry state, the oxygen scavenger packages A and B were not produced.

### (Comparative Example 6)

In Comparative Example 6, the oxygen scavenger packages A and B were produced in the same manner as in Example 1 except that an oxygen scavenger composition was produced by the following method [1'] instead of the method [1].

### Production of oxygen scavenger composition

In 16.5 g of water, 8.5 g of calcium chloride (CaCl₂) as a halide of an alkaline earth metal was dissolved to prepare an aqueous calcium chloride solution.

Next, 10.0 g of silica as a water-retaining carrier was put in a poly container having a volume of 300 ml, and the aqueous calcium chloride solution was added and mixed to obtain a moisture-donating agent.

Subsequently, 50.0 g of iron powder was mixed with the moisture-donating agent, 1.0 g of activated carbon was further added, and the mixture was shaken and mixed in the poly container to obtain an oxygen scavenger composition.

The obtained oxygen scavenger composition was a granular material in which powdery particles were aggregated (average particle size: 0.12 mm, the measurement method was as described above).

### (Comparative Example 7)

In Comparative Example 7, an oxygen scavenger composition and the oxygen scavenger packages A and B were produced in the same manner as in Comparative Example 6 except that the blending amount of each component was changed to the value listed in Table 1.

### <Evaluation>

The following evaluations were performed using the oxygen scavenger compositions and the oxygen scavenger packages A and B produced in Examples 1 to 16 and Comparative Examples 4 to 7. The results are presented in Table 1.

### (Water activity)

The water activity was measured by the following method using the oxygen scavenger composition produced in the above [1].

First, 1.0 g of the oxygen scavenger composition was put in a dedicated petri dish, and the measurement was carried out at 25°C using a water activity measuring apparatus ("AquaLab TDL2" available from METER Group, Inc.) according to a predetermined procedure for the apparatus.

The measurement was performed three times, and the arithmetic average value of the obtained results was evaluated as a water activity value of the oxygen scavenger composition of each Example or Comparative Example.

In this example, a case where the water activity was within 0.40 or more and 0.60 or less (intermediate water activity) was set to be good, and a case where the water activity was close to the median value of 0.50 was evaluated to be better. The value of the water activity in Table 1 was evaluated by rounding off to the third decimal place.

### (Oxygen absorption amount)

The oxygen absorption amount was measured by the following method using the oxygen scavenger package A produced in the above [2-1].

First, one oxygen scavenger package A was accommodated together with 1500 ml of air at 25°C in a gas barrier bag (available from Fukusuke Kogyo Co., Ltd., dimension: 250 mm × 400 mm, oxygen permeability: 7.3 ml/m²·day·atm) formed of a nylon/polyethylene laminate film, and the opening was sealed by heat-sealing. In addition, the oxygen concentration (initial oxygen concentration) in the gas barrier bag was measured at this time.

Then, after the gas barrier bag was immediately placed in a thermostatic bath at 25°C and held for 72 hours, the oxygen concentration (oxygen concentration after preservation) in the gas barrier bag was measured, and the oxygen absorption amount (initial oxygen concentration - oxygen concentration after preservation) was calculated. In addition, the calculated oxygen absorption amount was divided by the mass (unit: g) of the oxygen scavenger composition to calculate the oxygen absorption amount (unit: ml/1 g of bulk powder) per unit mass of the oxygen scavenger composition (bulk powder).

The oxygen concentration was measured using a gas analyzer ("Check Mate 3" available from MOCON, Inc.). The oxygen concentration was measured by inserting a hollow needle located at the tip of a silicon tube for sampling and attached to the gas analyzer into the bag from a sampling rubber sheet (25 mm × 25 mm, thickness: 2 mm) attached in advance to the gas barrier bag, and then measuring the oxygen concentration in the gas barrier bag.

The measurement was performed three times, and the arithmetic average value of the obtained results was evaluated as the oxygen absorption amount of the oxygen scavenger composition of each Example or Comparative Example. It means that the larger the oxygen absorption amount is, the better the oxygen absorption performance is. In this example, an oxygen scavenger composition (bulk powder) having an oxygen absorption amount per unit mass of 85.0 [ml/1 g of bulk powder] or more was evaluated as good.

### (Hydrogen generation amount)

The hydrogen generation amount was measured by the following method using the oxygen scavenger package B produced in the above [2-2].

First, one oxygen scavenger package B was accommodated together with 25 ml of air at 35°C in a gas barrier bag (available from Meiwa Pax Co., Ltd., dimension: 175 mm × 250 mm, oxygen permeability: 0.1 ml/m²·day·atm or less) formed of a nylon/aluminum foil/polyethylene laminate film, and the opening was sealed by heat-sealing.

Then, after the gas barrier bag was immediately placed in a thermostatic bath at 35°C and held for 72 hours, the hydrogen concentration in the gas barrier bag was measured by a gas chromatography method, and the hydrogen generation amount (unit: ml) was calculated. In addition, the calculated hydrogen generation amount was divided by the mass (unit: g) of the oxygen scavenger composition to calculate the hydrogen generation amount (unit: ml/1 g of bulk powder) per unit mass of the oxygen scavenger composition (bulk powder).

The hydrogen concentration was measured using a gas chromatograph ("GC-14A" available from Shimadzu Corporation).

The measurement was performed three times, and the arithmetic average value of the obtained results was evaluated as the hydrogen generation amount of the oxygen scavenger composition of each Example or Comparative Example. It means that the smaller the hydrogen generation amount, the more effectively the generation of hydrogen is suppressed. In this example, an oxygen scavenger composition (bulk powder) having a hydrogen generation amount per unit mass of 0.100 [ml/1 g of bulk powder] or less was evaluated as good.

### (Hydrogen generation amount per 100 ml of oxygen absorption amount)

Using the results of the oxygen absorption amount per 1 g of the oxygen scavenger composition and the hydrogen generation amount per 1 g of the oxygen scavenger composition calculated by the above method, the hydrogen generation amount per 100 ml of the oxygen absorption amount (unit: ml/100 ml of oxygen absorption amount), which was the amount of hydrogen generated when 100 ml of oxygen was absorbed, was calculated.

As the hydrogen generation amount per 100 ml of the oxygen absorption amount is smaller, the generation of hydrogen with respect to the oxygen absorption amount required in actual use is smaller, which is good. In this example, a sample having a hydrogen generation amount of 0.050 [ml/100 ml of oxygen absorption amount] or less per 100 ml of the oxygen absorption amount was evaluated as good.

### [Table 1]

**Table 1**

| | Blending amount | | | | | | | Composition of oxygen scavenger composition | | | Characteristics of oxygen scavenger composition | | | |
|---|---|---|---|---|---|---|---|---|---|---|---|---|---|---|
| | Iron powder | Activated carbon | Water | Halide of alkaline earth metal | Alkaline substance | Swelling agent | Silica | Content of activated carbon | Water content | Content of halide of alkaline earth metal | Water activity | Oxygen absorption amount per unit mass | Hydrogen generation amount per unit mass | Hydrogen generation amount per 100 ml of oxygen absorption amount |
| | | | | CaCl₂ | Ca(OH)₂ | Bentonite | | With respect to 100 parts by mass of iron | With respect to 100 parts by mass of activated carbon | With respect to 100 parts by mass of water | | | | |
| | g | g | g | g | g | g | g | Part(s) by mass | Part(s) by mass | Part(s) by mass | - | ml/1 g of bulk powder | ml/1 g of bulk powder | ml/100 ml of oxygen absorption amount |
| Example 1 | 20.0 | 4.0 | 14.8 | 8.4 | 0.2 | 1.5 | 0.0 | 20 | 370 | 57 | 0.480 | 135.2 | 0.003 | 0.002 |
| Example 2 | 20.0 | 4.0 | 13.2 | 7.5 | 0.2 | 1.5 | 0.0 | 20 | 330 | 57 | 0.499 | 138.3 | 0.014 | 0.010 |
| Example 3 | 20.0 | 4.0 | 11.6 | 6.6 | 0.2 | 1.5 | 0.0 | 20 | 290 | 57 | 0.459 | 128.8 | 0.014 | 0.011 |
| Example 4 | 20.0 | 5.0 | 18.5 | 10.5 | 0.2 | 1.5 | 0.0 | 25 | 370 | 57 | 0.465 | 108.7 | 0.004 | 0.003 |
| Example 5 | 20.0 | 5.0 | 16.5 | 9.3 | 0.2 | 1.5 | 0.0 | 25 | 330 | 56 | 0.470 | 128.1 | 0.006 | 0.005 |
| Example 6 | 20.0 | 5.0 | 14.5 | 8.2 | 0.2 | 1.5 | 0.0 | 25 | 290 | 57 | 0.480 | 111.5 | 0.021 | 0.019 |
| Example 7 | 20.0 | 5.0 | 12.5 | 7.1 | 0.2 | 1.5 | 0.0 | 25 | 250 | 57 | 0.495 | 94.5 | 0.036 | 0.039 |
| Example 8 | 20.0 | 5.0 | 16.5 | 8.6 | 0.2 | 1.5 | 0.0 | 25 | 330 | 52 | 0.490 | 128.1 | 0.002 | 0.002 |
| Example 9 | 20.0 | 5.0 | 16.5 | 9.1 | 0.2 | 1.5 | 0.0 | 25 | 330 | 55 | 0.427 | 119.1 | 0.034 | 0.029 |
| Example 10 | 20.0 | 5.0 | 16.5 | 10.1 | 0.2 | 1.5 | 0.0 | 25 | 330 | 61 | 0.496 | 87.4 | 0.025 | 0.028 |
| Example 11 | 20.0 | 6.0 | 22.2 | 12.5 | 0.2 | 1.5 | 0.0 | 30 | 370 | 56 | 0.476 | 96.7 | 0.010 | 0.011 |
| Example 12 | 20.0 | 6.0 | 19.8 | 11.2 | 0.2 | 1.5 | 0.0 | 30 | 330 | 57 | 0.495 | 103.7 | 0.009 | 0.009 |
| Example 13 | 20.0 | 6.0 | 17.4 | 9.8 | 0.2 | 1.5 | 0.0 | 30 | 290 | 56 | 0.490 | 108.0 | 0.023 | 0.021 |
| Example 14 | 20.0 | 8.0 | 29.6 | 16.8 | 0.2 | 1.5 | 0.0 | 40 | 370 | 57 | 0.478 | 85.2 | 0.035 | 0.042 |
| Example 15 | 20.0 | 8.0 | 26.4 | 14.9 | 0.2 | 1.5 | 0.0 | 40 | 330 | 57 | 0.492 | 88.1 | 0.032 | 0.036 |
| Example 16 | 20.0 | 8.0 | 23.2 | 13.1 | 0.2 | 1.5 | 0.0 | 40 | 290 | 57 | 0.497 | 96.7 | 0.018 | 0.019 |
| Comparative Example 1 | 20.0 | 3.0 | 11.1 | 6.3 | 0.2 | 1.5 | 0.0 | 15 | 370 | 57 | Measurement not possible because the oxygen scavenger composition turned into a slurry | | | |
| Comparative Example 2 | 20.0 | 3.0 | 9.9 | 5.6 | 0.2 | 1.5 | 0.0 | 15 | 330 | 57 | Measurement not possible because the oxygen scavenger composition turned into a slurry | | | |
| Comparative Example 3 | 20.0 | 3.0 | 8.7 | 4.9 | 0.2 | 1.5 | 0.0 | 15 | 290 | 56 | Measurement not possible because the oxygen scavenger composition turned into a slurry | | | |
| Comparative Example 4 | 20.0 | 5.0 | 20.5 | 11.6 | 0.2 | 1.5 | 0.0 | 25 | 410 | 57 | 0.491 | 11.8 | 0.012 | 0.100 |
| Comparative Example 5 | 20.0 | 5.0 | 19.5 | 11.0 | 0.2 | 1.5 | 0.0 | 25 | 390 | 56 | 0.480 | 14.1 | 0.011 | 0.080 |
| Comparative Example 6 | 50.0 | 1.0 | 16.5 | 8.5 | 0.0 | 0.0 | 10.0 | 2 | 1650 | 52 | 0.499 | 72.2 | 0.229 | 0.318 |
| Comparative Example 7 | 50.0 | 1.0 | 15.5 | 9.5 | 0.0 | 0.0 | 10.0 | 2 | 1550 | 61 | 0.479 | 80.9 | 0.232 | 0.287 |

As indicated in Table 1, it was confirmed that the oxygen scavenger composition containing iron powder, activated carbon, water, a halide of an alkaline earth metal, and an alkaline substance and having predetermined contents of iron powder, activated carbon, water, and a halide of an alkaline earth metal exhibited the intermediate water activity, was excellent in oxygen absorption performance, and generated a small amount of hydrogen (Examples 1 to 16).

On the other hand, it was confirmed that when the content of the activated carbon with respect to the iron powder was less than the predetermined ratio, the activated carbon functioning as a water-retaining carrier could not sufficiently retain water, and a slurry state was formed with excessive moisture, so that an oxygen scavenger package could not be produced (Comparative Examples 1 to 3).

Further, it was confirmed that even when the content of the activated carbon with respect to the iron powder was a suitable amount, when the water content with respect to the activated carbon was excessively larger than the predetermined ratio, the oxygen absorption amount was reduced (Comparative Examples 4 and 5).

Furthermore, it was confirmed that when silica was used instead of the activated carbon, the silica functioned as a water-retaining carrier and could retain water, so that, although an oxygen scavenger composition of a granular material could be obtained, the oxygen absorption amount was small, and the hydrogen generation amount was large (Comparative Examples 6 and 7).

## Claims

1. An oxygen scavenger composition, comprising iron powder, activated carbon, water, a halide of an alkaline earth metal, and an alkaline substance, wherein a content of the activated carbon is 20 parts by mass or more and 40 parts by mass or less with respect to 100 parts by mass of a content of the iron powder, a content of the water is 230 parts by mass or more and 370 parts by mass or less with respect to 100 parts by mass of the content of the activated carbon, and a content of the halide of the alkaline earth metal is 50 parts by mass or more and 65 parts by mass or less with respect to 100 parts by mass of the content of the water.

2. The oxygen scavenger composition according to claim 1, wherein the halide of the alkaline earth metal is one or more selected from the group consisting of calcium chloride, magnesium chloride, magnesium bromide, and calcium bromide.

3. The oxygen scavenger composition according to claim 1 or 2, wherein the alkaline substance is one or more selected from the group consisting of hydroxides of alkali metals, hydroxides of alkaline earth metals, and salts composed of a weak acid and a strong base.

4. The oxygen scavenger composition according to any one of claims 1 to 3, wherein the alkaline substance is calcium hydroxide.

5. The oxygen scavenger composition according to any one of claims 1 to 4, further comprising a swelling agent.

6. The oxygen scavenger composition according to claim 5, wherein the swelling agent is one or more selected from the group consisting of carboxymethylcellulose calcium, carboxymethylcellulose sodium, calcium bentonite, and sodium bentonite.

7. The oxygen scavenger composition according to claim 5 or 6, wherein a content of the swelling agent is 3 parts by mass or more and 20 parts by mass or less with respect to 100 parts by mass of the content of the water.

8. The oxygen scavenger composition according to any one of claims 1 to 7, which is a granular material.

9. The oxygen scavenger composition according to any one of claims 1 to 8, wherein a water activity of the oxygen scavenger composition is 0.40 or more and 0.60 or less.

10. A method for producing the oxygen scavenger composition according to any one of claims 1 to 9, the method comprising mixing iron powder, activated carbon, water, a halide of an alkaline earth metal, and an alkaline substance.

11. An oxygen scavenger package, comprising:
the oxygen scavenger composition according to any one of claims 1 to 9; and
an air-permeable packaging material accommodating the oxygen scavenger composition.
